# EUROPEAN PATENT APPLICATION

(11) **EP 4 799 954 A1**
(43) Date of publication of application: **02.09.2026**
(21) Application number: 25161142.2
(22) Date of filing: 28.02.2025
(51) Int. Cl.: B65G 1/04

(54) **STORAGE SYSTEM**

(71) Applicant: AutoStore Technology AS, 5578 Nedre Vats (NO)
(72) Inventor: STUHAUG, Ragnar, 5578 Nedre Vats (NO)
(74) Representative: Kilburn & Strode LLP

(57) **Abstract**

The disclosure relates to a storage system for an automated storage and retrieval system. The storage system comprises a storage grid and a rail system arranged on top of the storage grid. The rail system comprises a first section configured to move between open and closed positions to enable access between an access space located beneath the rail system and at least a portion of the rail system.

## Description

### TECHNICAL FIELD

The disclosure relates to storage system. More particularly, it relates to a storage system for an automated storage and retrieval system.

### Background

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Throughout the normal operation of the automated storage and retrieval system, it may be necessary to provide access to and from the rail system for human operators as well as for the robotic vehicles. This may be for any plausible reason, such as servicing, maintenance, or, to retrieve a malfunctioning robotic container-handling vehicle operating on the rail system. Typically, access to and from the rail system may be provided by access points arranged at the periphery of the grid at to the height of the rail system. The access points may allow an operator to access the edge of the rail system from a service area arranged next to the grid. However, as storage demands increase and in turn the size of the storage grid grows, access to the whole rail system (in particular centra portions of the rail system) becomes increasingly difficult. For example, access to a malfunctioning robot located in a central portion of the grid requires traversal of increasingly longer portions of the rail system, leading to longer downtime and increased safety risks.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a plan view of a storage system according to an embodiment of the present disclosure;
Fig. 6A shows a side-on view of a storage system in a first configuration according to an embodiment of the present disclosure;
Fig. 6B shows a side-on view of the storage system of Fig. 6A in a second configuration;
Fig. 7A shows a side-on view of a storage system in a first configuration according to an alternative embodiment of the present disclosure;
Fig. 7B shows a side-on view of the storage system of Fig. 7A in a second configuration;
Fig. 8A shows a side-on view of a storage system in a first configuration according to another alternative embodiment of the present disclosure; and
Fig. 8B shows a side-on view of the storage system of Fig. 8A in a second configuration.

### DETAILED DESCRIPTION

In overview, the disclosure relates to a storage system for an automated storage and retrieval system. The storage system comprises a storage grid and a rail system arranged on top of the storage grid. The rail system arranged on top of the storage grid has at least one section that is movable relative to the rest of the rail system. The moveable section is configured to move between an open position and a closed position to enable access between the rail system and a portion of the storage system located beneath the rail system. The present disclosure therefore provides an alternative means for accessing the rail system on top of the grid, for example to carry out servicing, maintenance, to retrieve malfunctioning robots, or for any other reason. In particular, the disclosed storage system including the moveable section of the rail system allows for a service operator or vehicle to access the rail system from a location within the storage grid (i.e. beneath the rail system), rather than just at the periphery of the storage grid (as provided by conventional techniques). When the moveable section is in the closed position, the moveable section of the rail system is aligned with the rest of the rail system, so that the rail system as a whole may function as normal, permitting the traversal of container-handling vehicles across the whole rail system including the moveable section. In other words, while in the closed position, container-handling vehicles are not disrupted from carrying out their normal operations within the automated storage and retrieval system. When the moveable section is in the open position, access is enabled between the rail system and a location beneath the rail system within the storage grid. This enables a service operator or vehicle to access the rail system from an access space within the storage grid, thereby providing an alternative means for accessing the rail system. In comparison to access from a periphery of the grid, providing access by means of a moveable section of the rail system may decrease the travel time to reach a part of the rail system in which a malfunctioning container-handling vehicle resides, thus allowing for quicker servicing and/or retrieval thereby increasing the efficiency of the automated storage and retrieval system. In addition, the moveable section may provide two-way access, meaning that a service operator located on the rail system is able to quickly exit via the access provided by the moveable section. In this way, the moveable section may provide access for an emergency exit, which may be more quickly accessible from central portions of the rail system than any periphery access point. In other words, the moveable section may function as an emergency exit for service operators located on the rail system. This emergency exit may exist at a location closer to the middle area of the rail system than a periphery of the rail system. The portion of the storage system located beneath the moveable section may be configured as an access space that comprises any of ladder, stairs and a lifting means configured to enable access to the rail system when the moveable section is in the open position. The access space may be defined as a space within the storage grid that is surrounded by storage columns of the storage grid and which extends from a floor level of the grid (i.e. the base of the grid) to an underside of the moveable section. In such examples, the ladder, stairs or lifting means may extend through the vertical extent of the access space to provide access for a service operator to the moveable section of the rail system. Upon an opening of the moveable section, the service operator is provided with access to the rail system from beneath, i.e., from within the access space.

In some embodiments, the access space comprises a lifting means that includes a raisable support platform suitable to support a service operator and/or vehicle to move between a lower level of the access space and a higher level of the access space that is substantially level to the rail system. In particular, the support platform may be lifted from a lowered position within the access space to a raised position that is substantially level to the rail system when the moveable section is in the open position. The lifting means thus enables easy access to the rail system from a lower position within the access space, such as from the ground level. In other words, the lifting means allows a service operator to readily access the rail system when the moveable section is in the open position, and further ensures that the normal operations of the automated storage and retrieval system are not disrupted when the moveable section is in the closed position.

In some examples, the raisable support platform may be situated directly beneath the moveable section, and be rigidly coupled to the moveable section (e.g. by pillars, walls, or other suitable structural means) such that when the support platform is raised or lowered, the moveable section is also raised or lowered in an identical manner. In this way, the support platform and moveable section are coupled to form a single lifting device that is raised or lowered to both raise or lower the moveable section between open and closed positions and raise or lower the support platform to provide access to the rail system.

In some embodiments, the support platform may also comprise a rail element configured to couple to the rail system when in the open position. This allows for any vehicles housed on the support platform to readily transfer from the support platform to the rail system when the lifting device is raised. Vehicles housed in the portion of the storage system located beneath the moveable section may be any vehicle suitable for traversing the rail system. This way, when in the open position, the vehicles can traverse the rail system to reach a malfunctioning container-handling vehicle to service and/or retrieve quicker, and increase the efficiency of the automated storage and retrieval system.

The lowered position of the raisable support platform may be at substantially ground level, or substantially at the level of the base of the grid. Alternatively, the lowered position may be arranged at some intermediate level between the base of the grid and the rail system arranged on the top of the grid. In such embodiments, the access space may comprise a ladder, stairs or any other suitable means to provide access from a ground level or a base level to the lowered position of the support platform.

In some embodiments, the access space located beneath the rail system may also be coupled to a tunnel that is configured to provide access between an external area (e.g. an area located outside of the storage grid) to the access space. Service operators and/or vehicles may therefore access rail system via the access space and the moveable section of rail system from an external area by travelling through the tunnel. In other words, by virtue of this arrangement, access is enabled for a service operator or vehicle to travel between an area outside of the storage grid and the rail system.

In some examples, the support platform may be coupled to the moveable section by a pillar and/or one or more walls. In this arrangement, when the lifting means moves the support platform, it also moves the moveable section. The support platform may also comprise a rail element configured to couple to the rail system when in the open position. This allows for normal operation of the automated storage and retrieval system while in the open position, and also allows for any vehicles housed on the support platform to readily traverse the rail system when in the open position. Vehicles housed in the portion of the storage system located beneath the moveable section may be any vehicle suitable for traversing the rail system. This way, when in the open position, the vehicles can traverse the rail system to reach a malfunctioning container-handling vehicle to service and/or retrieve quicker, and increase the efficiency of the automated storage and retrieval system.

### Automated storage and retrieval system overview

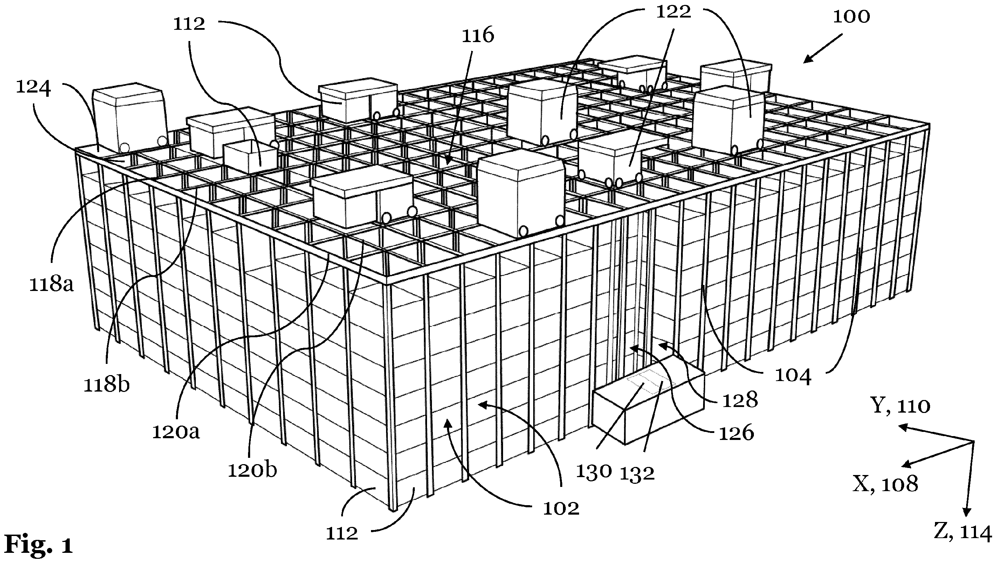

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

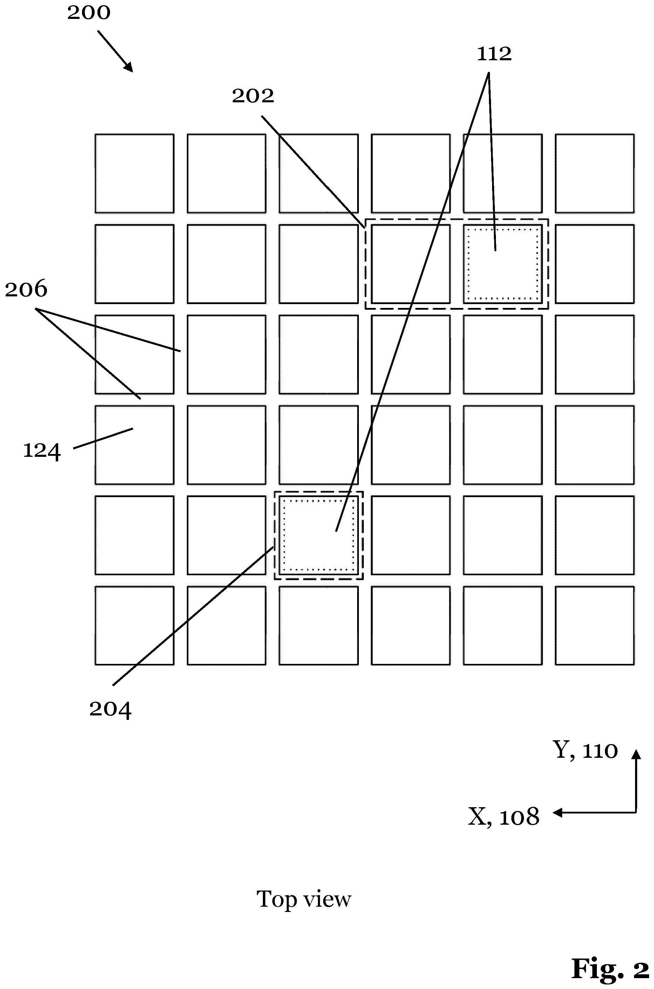

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

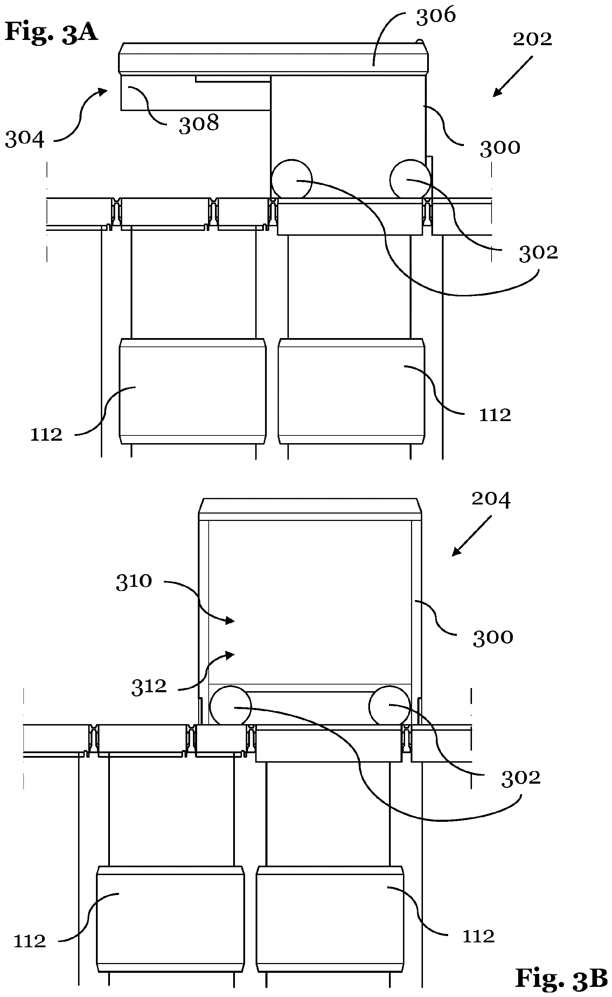

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

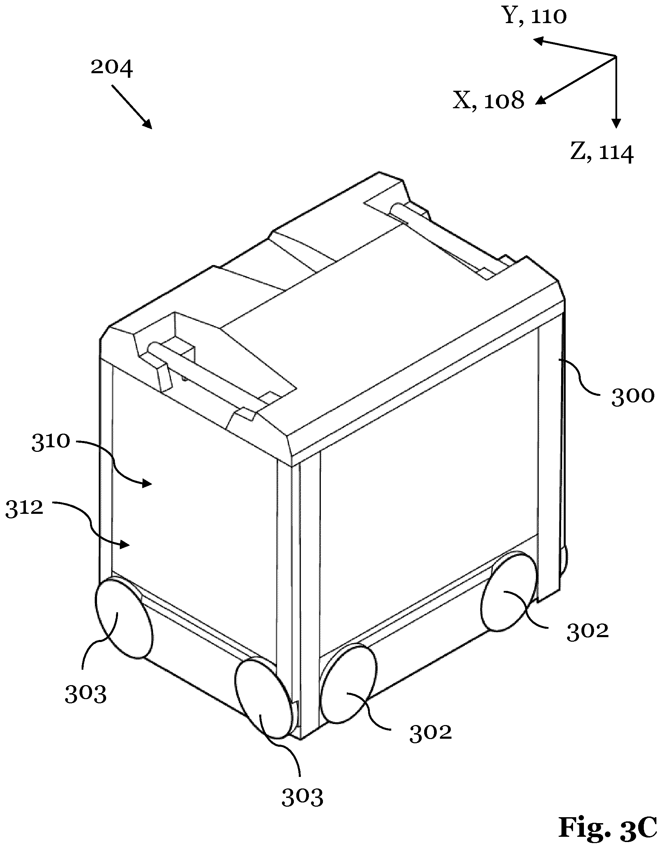

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

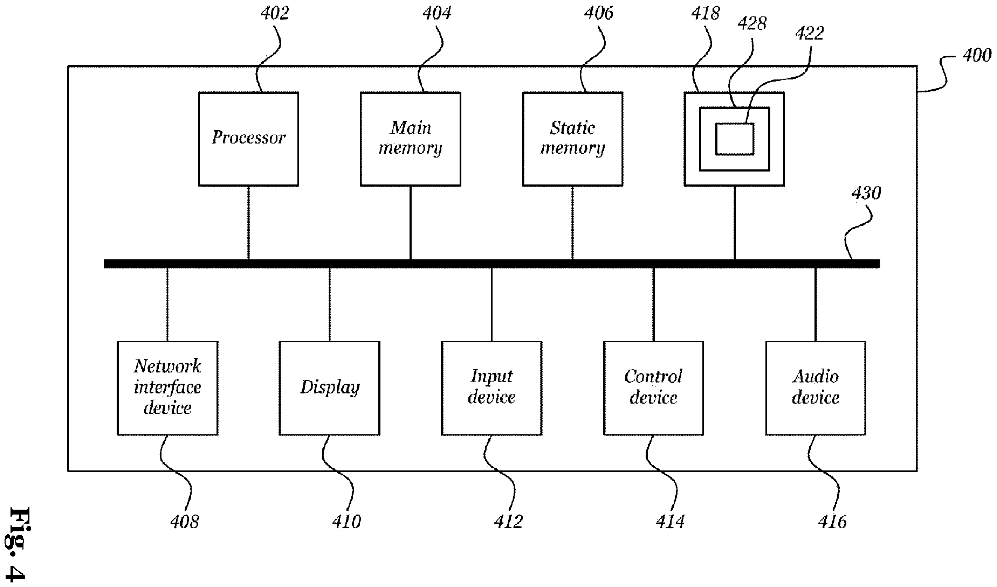

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Access via rail system

A rail system comprising a moveable section is provided in the present disclosure to provide an improved means for enabling access to the rail system.

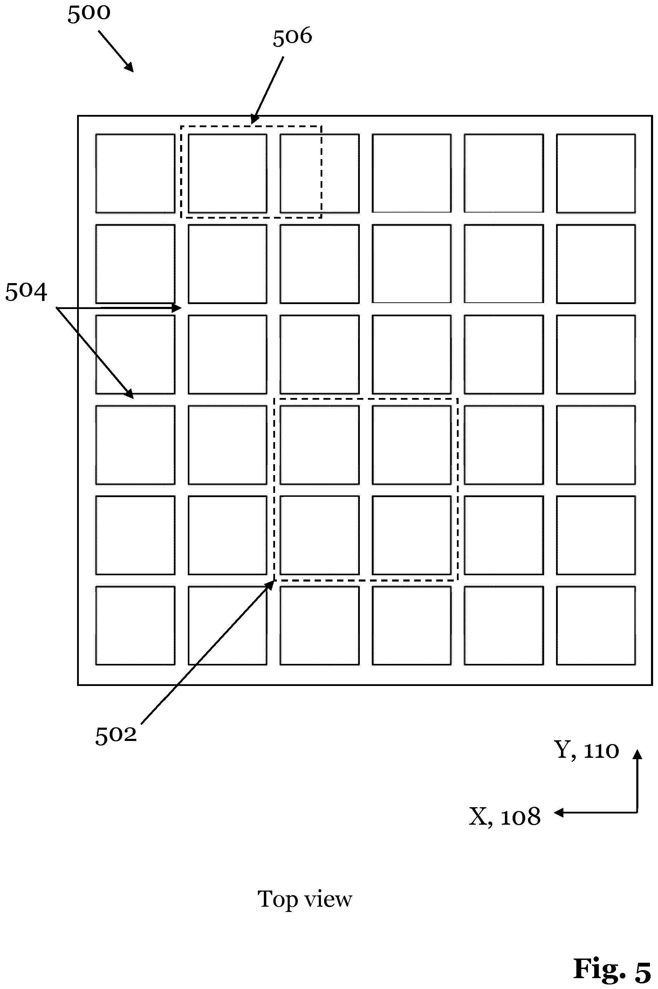

Referring now to Fig. 5, a plan or top view of a rail system 500 is shown. The rail system 500 comprises a plurality of rails 504 arranged in a similar manner as described with reference to Fig. 2. The rail system is arranged on top of a storage grid (not shown in Fig. 5 as it is arranged beneath the rail system), such as a storage grid 100 of an automated storage and retrieval system as shown in Fig. 1. The rail system 500 may be suitable for robots 122 (i.e. robotic container-handling vehicles such as those described above with reference to Figs. 3A - 3C) to travel thereon as described with reference to Fig. 2 above. That is, the rail system 500 may be suitable for facilitating the movement and normal operation of robotic container-handling vehicles 122 on top of a storage grid of an automated storage and retrieval system.

In more detail, Fig. 5 shows that the rail system 500 comprises a moveable section 502 outlined by the dashed line in Fig. 5. The moveable section 502 is configured to move between an open position and a closed position to enable access for a service operator between the rail system and a portion of the storage system located beneath the rail system. In other words, the implementation of a moveable section of the rail system enables access to the rail system from beneath, i.e., within the storage grid itself. The portion of the storage system beneath the rail system that can be accessed via the moveable section of rail when the moveable section of rail is in the open position is referred to herein as an access space, which is described in more detail below.

In more detail, while the moveable section is in the closed position, access between the rail system and the access space located beneath the rail system moveable section is prevented. However, by being able to move the moveable section 502 into one or more open positions, access to a space beneath the rail system (i.e. a space situated beneath the moveable section when arranged in the closed position) is enabled. Movement of the moveable section 502 between the closed and open positions is described in more detail below. In more detail, access is provided between the rail system and an access space located beneath the rail system via an access opening in the rail system when the moveable section is the open position, and access is prevented when the moveable section is in the closed position.

Referring again to Fig. 5, the moveable section 502 is depicted in the closed position. While in the closed position, the moveable section acts as a normal part of the rail system, permitting the traversal of robots across it. In other words, in the closed position the moveable section is arranged in situ with the rest of the rail system 500 to allow robots to freely travel across the moveable section as part of their normal operation in the automated storage and retrieval system.

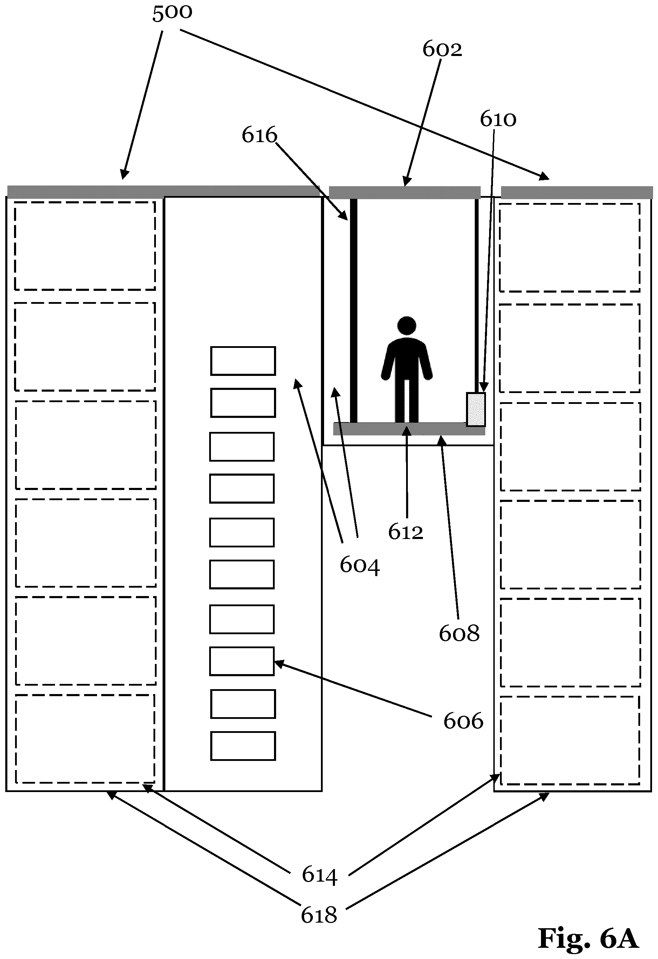

Typically, below the rail system resides storage columns containing storage containers as described above with reference to Fig. 1. However, beneath at least the moveable section 502, there may be instead be an access space that facilitates access to the rail system for a service operator from beneath the rail system. The access space located beneath the rail system is described in more detail below with reference to Figs. 6A - 8B.

As shown in Fig. 5, this particular example of the moveable section 502 substantially corresponds to the size of 4 storage columns. That is, 2 storage columns in the X direction 108 and 2 storage columns in the Y direction 110, creating a 2x2 moveable section 502. However, it will be appreciated that in general the moveable section may be any suitable size. For example, the size of the moveable section may correspond to the width of 2 columns in the X direction, and the width of 1 column in the Y direction. These dimensions are provided as examples, and the size of the moveable section is in no way limited to the provided examples. Moreover, the moveable section 502 does not need to exist as an integer number of storage columns in width or length. For example, also shown in Fig. 5 is an exemplary moveable section 506 which is similar to the moveable section 502, but has a size substantially corresponding to the width of 1.5 columns in both the X and Y directions. Similarly, the dimensions of the access space (not shown in Fig. 5) located beneath the rail system may be any suitable size. In general, the extent of the access space in X and Y may correspond to the extent of the moveable section in those directions. In general, the extent in X and Y of the moveable section and the access space beneath the rail system may be sized to accommodate a service operator or multiple servicing personnel, and/or a vehicle such as a servicing vehicle. In general, the access space may be located directly beneath the location of the moveable section 502 when the moveable section is in the closed position, but this is not essential.

As described above, when in the closed position, the moveable section may operably couple to the rest of the rail system thereby permitting the traversal of robots across it. That is, in the closed position, the rail system may function according to its normal operation, meaning that robots operating on the rail system are able to freely travel across the whole rail system, including the moveable section. In other words, when in the closed position, the section of rail system is flush with the rest of the rail system.

When in the open position, the moveable section may be removed with respect to rest of the rail system, meaning that robots (e.g., robotic container-handling vehicles) may not be free to traverse the moveable section 502. However, robots operating on the rail system may still be able to traverse the rest of the rail system. In general however, it may be preferable that, when in the open position that allows access to an access space located beneath the rail system, a control system for the robots may prevent the robots from moving on the rail system in the interests of safety for any operators accessing the rail system. This is because when in the open position, it is possible for a human and/or vehicle to travel between the access space located beneath the rail system 500 and the rail system itself.

In order to move between the open position and the closed position the moveable section 502 may pivot about an axis, such as a horizontal axis substantially aligned in the X or Y directions and arranged on one edge of the moveable section 502. For example, referring to Fig. 5, the right-hand edge of the moveable section that is aligned in the Y direction may comprise one or more hinge links or other suitable means that pivotably couple the moveable section 502 to the rest of the rail system 500. To move from the closed position to the open position, the moveable section may then pivot upwards or downwards, thereby providing an opening that enables access to the space beneath the rail system.

Alternatively, the moveable section 502 may slide substantially in a horizontal (X-Y) plane between the open position and the closed position. For example, the moveable section may be mounted on rails, tracks, or the like that facilitate translational movement in the X or Y directions between the open and closed positions. In another alternative, the moveable section may be arranged to move substantially in the Z direction upwards (towards the viewer when viewing Fig. 5) or downwards (away from the viewer when viewing Fig. 5) to facilitate access to the space beneath the rail system. In some examples that are described in more detail below with reference to Figs 6A - 8B, the moveable section is connected to a lifting device that causes the moveable section to move upwards into an open position to facilitate access.

In general, the moveable section 502 may be configured to pivot or translate in any combination. In some examples, the moveable section 502 may pivot and/or slide about two or more axes. For example, the moveable section 502 may comprise two or more separate portions, each portion being configured to pivot about a respective axis or translate in a respective direction. Alternatively, the moveable section 502 may comprise two or more portions that are coupled by hinges or the like that allow the portions to pivot with respect to each other, thus allowing the moveable section to be folded. In sliding or folding, the moveable section 502 may be tucked away (e.g., underneath other portions of the rail system) so as to not protrude above the rail system or obscure parts of the rail system that may require maintenance.

### Access space

As described above, the volume of space beneath the rail system is typically formed of storage columns that are configured to store items in vertical stacks of containers. However, in the present disclosure, at least a portion of the space beneath the rail system (optionally the space directly beneath the moveable section when the moveable section is in the closed position) is reserved for facilitating access to and from the rail system. In other words, at least one storage column located beneath the rail system 500 is removed, and instead replaced with an access space 604, i.e., an volume of space, configured to provide access to and from the rail system, for a service operator, robots, or other entities that may need to access the rail system.

The access space 604 is generally a cavity located within the storage grid that may be defined by walls and/or adjacent storage columns of the storage grid. Figs. 6A - 8B described below demonstrate that the access space 604 is defined as a cavity between storage columns. In general, the access space 604 may be substantially cuboidal since its shape is defined by cuboidal storage columns of the storage grid, and the size in the X and Y directions of the access space 604 may match the dimensions of an integer multiple of storage columns. In general, the X and Y dimensions of the access space 604 may match the X and Y dimensions of the moveable section 502, but this is not essential. Additionally, the access space 604 may be situated directly beneath the moveable section 502, but this is also not essential.

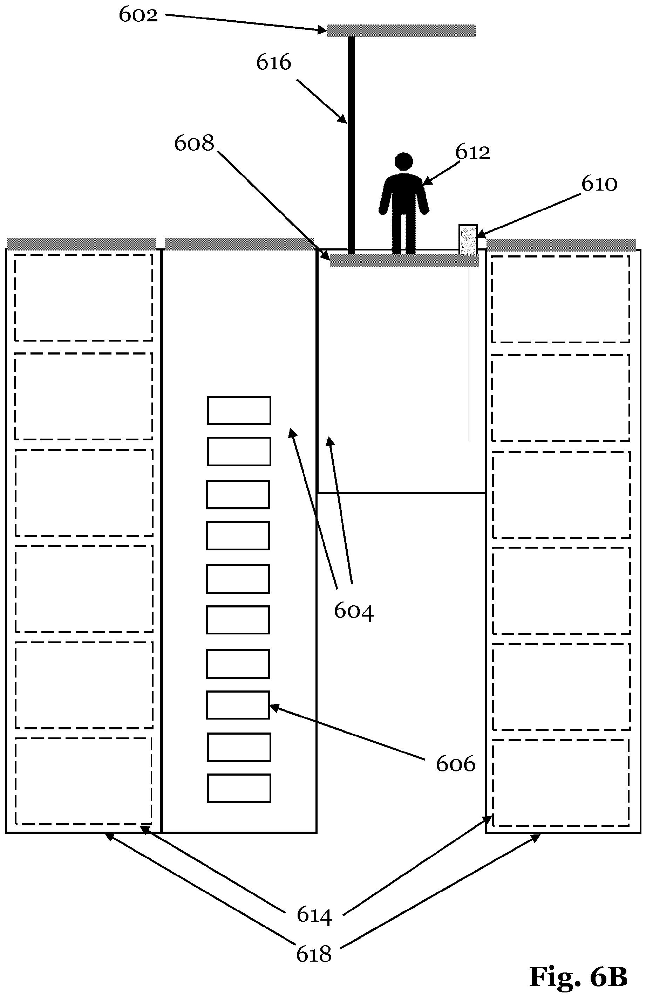

With reference to Figs. 6A - 6B, an access space 604 is depicted in a side-on view of the storage grid. It can be seen that the access space 604 is disposed beneath the rail system 500 and may at least in part be arranged beneath the moveable section 502. In general, the access space 604 is defined as a cavity or volume of space that exists between storage columns 618 of the storage grid. As shown in Figs. 6A - 8B, the storage columns may contain vertical stacks of one or more storage containers 614. With reference to Figs. 6A and 6B, the access space 604 may comprise a ladder and/or stairs 606 configured to provide access for a service operator 612 between a lower area of the access space 604 (closer to a floor level or base of the storage grid) and an upper area of the access space 604 (closer to the rail system arranged on top of the storage grid). That is, a service operator 612 may use the ladder to climb from a lower area to an upper area nearer to the rail system. In general, the access space 604 may comprise a ladder, stairs, or other elevation means that extend through the entire vertical extent of the access space 604 from a floor level of the gird (i.e., the base of the grid) to an underside of the moveable section, thereby providing a service operator with full vertical access from the floor of the warehouse in which the storage grid is situated to the moveable section of rail system which, when opened, in turn provides the service operator with access to the rail system 500 arranged on top of the grid.

As shown in Figs. 6A and 6B, the access space 604 may in some embodiments also comprise a raisable support platform 608 operably connected to a lifting mechanism 610. The lifting mechanism is configured to move the support platform between a lowered support platform position within the access space 604 and a raised position that is either within the access space 604, is substantially level with the rail system 500 on top of the storage grid, or is raised above the level of the rail system. When in the lowered position, (shown in Fig. 6A) the support platform may be substantially beneath the moveable section 602 which is in a closed position, and substantially within the access space 604. When in the raised position (shown in Fig. 6B), the support platform 608 may be substantially level with or raised above the rail system, whilst the moveable section is in an open position to allow access from the access space 604 to the rail system 500.

The support platform 608 may be suitable for supporting a human (service operator) in order to raise them from the lowered position within the access space 604, to the raised position as can be seen in Figs. 6A and 6B, thus allowing the human to access the rail system. Additionally or alternatively, the support platform 608 may be suitable for supporting a service vehicle or other type of robotic vehicle that can access the grid via the open moveable section 502 to operate on the rail system. For example, a service vehicle may be stored in the support platform 608 within the access space 604, until such a time that it is required to retrieve a malfunctioning robotic container-handling vehicle operating on the rail system 500. At that point, the moveable section 500 may be caused to move to an open position and the support platform 608 moved to the raised position to allow the service vehicle to access the rail system to retrieve the malfunctioning robotic container-handling vehicle and transport it to a separate service area (e.g., at the periphery of the grid). After delivering the malfunctioning robotic container-handling vehicle to the service area, the service vehicle may return to the support platform 608 for storage within the access space 604.

The lifting mechanism 610 may comprise any suitable means for raising and lowering the support platform 608. Some non-limiting examples may include a hydraulic system, a pulley system, a pneumatic system, an electric actuator, and a magnetic lift. In general, the skilled person would be aware that any other such lifting mechanism capable of raising and lowering the support platform may also be used in addition to or alternate to the examples provided.

In some examples, the support platform 608 is rigidly coupled to the moveable section 602 such that when the support platform 608 is raised or lowered, the moveable section of the rail system is also raised or lowered in the same fashion. In general, the moveable section and support platform may be mechanically coupled by means of one or more pillars or walls 616, but in general any suitable rigid structural features may be used. In such examples, since the moveable section 502 is rigidly coupled to the support platform, its movement between open and closed positions corresponds to the vertical movement of the support platform between the raised and lowered positions. In other words, in such examples, the moveable section is configured to vertically move, under the action of the lifting mechanism, in the Z direction between the open and closed positions. As shown in Fig. 6A, the moveable section is arranged in the closed position whilst the support platform is correspondingly arranged in the lowered position. As shown in Fig. 6B, the moveable section is arranged in the open position whilst the support platform is correspondingly arranged in raised position.

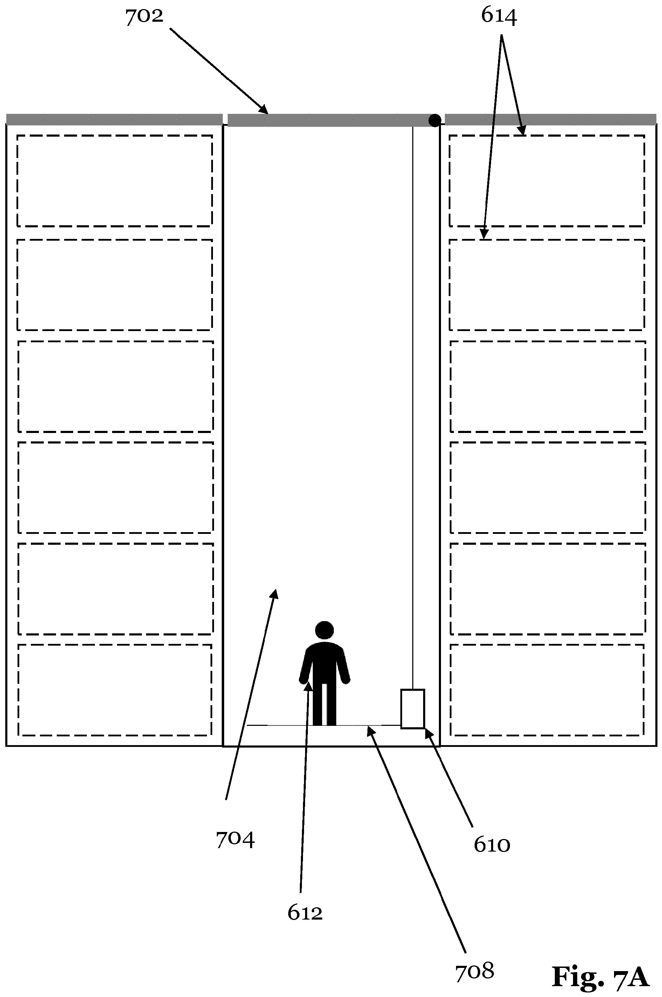

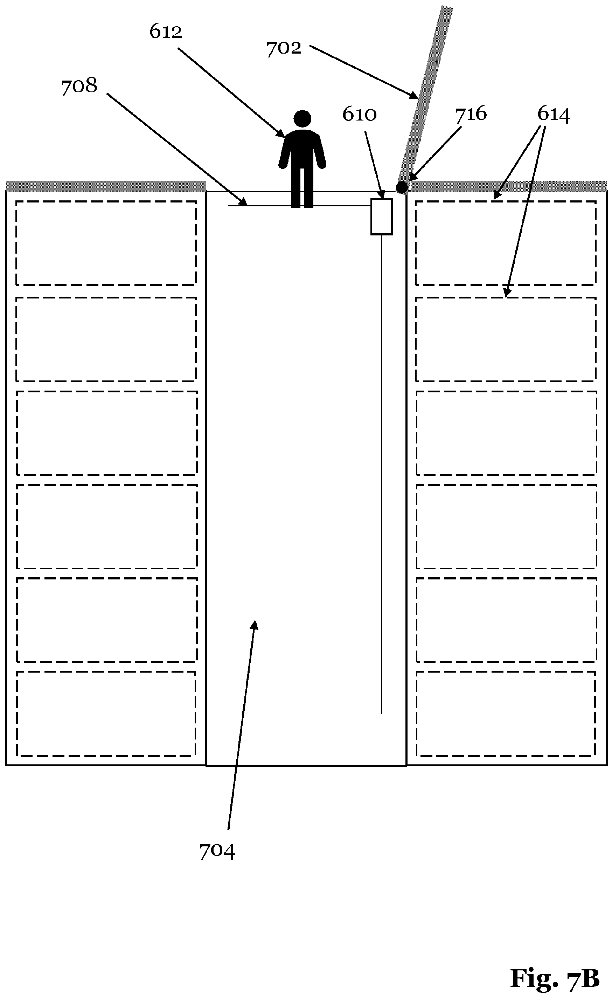

Since the moveable section 502 and support platform 608 are rigidly coupled in the example shown in Figs. 6A and 6B, it would be apparent that their respective movements occur substantially simultaneously. However, in other examples, such as those described below with reference to Figs. 7A and 7B, the moveable section and support platform may not be rigidly coupled so that their respective movements are independent. In such examples, the movement of the moveable section may occur at a different time to the movement of the support platform. For example, when providing access from the access space 604 to the rail system, the moveable section may transition from a closed to an open position prior to the support platform transitioning from a lowered to a raised position. Similarly, the support platform may transition from the raised to the lowered position prior to the moveable section transitioning from the open to the closed position.

As described above, in some examples, the access space 604 may be configured to house a vehicle, optionally supported on the support platform 608. That is, the vehicle may be stored on the support platform 608, and with reference to Figs. 6A and 6B, it may be stored substantially where the service operator 612 is shown. For example, the access space 604 may be configured to house any vehicle suitable for traversing the rail system. When in the deployed position, the vehicle has direct access to the rail system such that it can travel across it to perform any necessary activity. In a non-limiting example, this may comprise using the vehicle to travel to a malfunctioning robot located on the rail system, and retrieving or servicing the malfunctioning robot.

In such examples in which the access space 604 is configured to house a vehicle, the support platform 608 may comprise to a rail element upon which the vehicle may be mounted. The rail element may be arranged on the support platform such that when in the support platform is in the raised position, the rail element can couple with a fixed portion of the rail system situated adjacent to the support platform. The rail element may then form a part of the rail system when the support platform is in the raised position, as the moveable section 502 does when it is in the closed position. This allows for access to be provided between the rail system and the access space 604 without negatively effecting the routing of the robots, maintaining the efficiency of the automated storage and retrieval system. If the access space 604 and/or the support platform 608 houses a vehicle, it may be situated on the rail element such that it can readily transfer to the rest of the rail system when the rail element couples to the adjacent fixed portion of the rail system. In some examples, the support platform 608 and/or access space 604, may be large enough to house multiple vehicles that can interact with the rest of the rail system when the support platform is in the raised position.

In the examples depicted in Figs. 6A and 6B, the ladder and/or stairs 606 are shown as being adjacent to the lifting means. It will be appreciated that the ladder may instead be disposed below the support platform 608 and the lifting means 610. In this arrangement, there may be a gap within the support platform allowing a service operator 612 to climb through. Alternatively, the access space 604 may comprise any other suitable means to allow a service operator to climb the stairs or ladder and move onto the support platform 608. Arranging a ladder or stairs directly beneath the support platform may be a preferable embodiment since less space in the X and Y directions is occupied, thereby maximising the space available for storage of goods.

In some examples, the access space 604 may comprise a lifting means that extends through the full vertical extent of the access space 604. In other words, whilst the examples described above with reference to Figs. 6A and 6B refer to a support platform that has a lowered position arranged at an intermediate height between a base and the top of the storage grid, in other examples, the access space 604 may comprise a support platform that extends between a lowered position arranged substantially at the base of the grid, to a raised position substantially level with or above the rail system arranged on top of the grid. Such an example is shown in Figs. 7A and 7B, in which the requirement for additional ladder or stairs is avoided.

In more detail, referring to Figs. 7A and 7B, a support platform 708 may be configured to travel through the full vertical extent of the access space 704 (i.e., the full height of the grid) between a lowered position situated generally at the base of the grid (shown in Fig. 7A) and a raised position situated generally at the top of the grid (shown in Fig. 7B). For example, in the absence of the ladder 606, the lifting means 610 may be configured to reach to a lower area than depicted in Figs. 6A and 6B, thereby providing access between a lower area of the access space 604 and an upper area of the access space 604.

Referring to Fig. 7A in more detail, the moveable section of the rail system 702 is depicted in the closed position and the support platform 708 is depicted in the lowered position. In contrast, Fig. 7B depicts the moveable section 702 in the open position and the support platform 708 in raised position. In the illustrated example, in transitioning from the closed position to the open position, the moveable section 702 may pivot about an axis 716, although it would be appreciated that any suitable arrangement as described above may be employed for moving the moveable section between open and closed positions. As discussed above, movement of the moveable section may coincide with the lifting means transitioning between the lowered position and the raised position. For example, the moveable section may transition to the open position before or substantially simultaneously with the transition of the support platform from the lowered to the raised position.

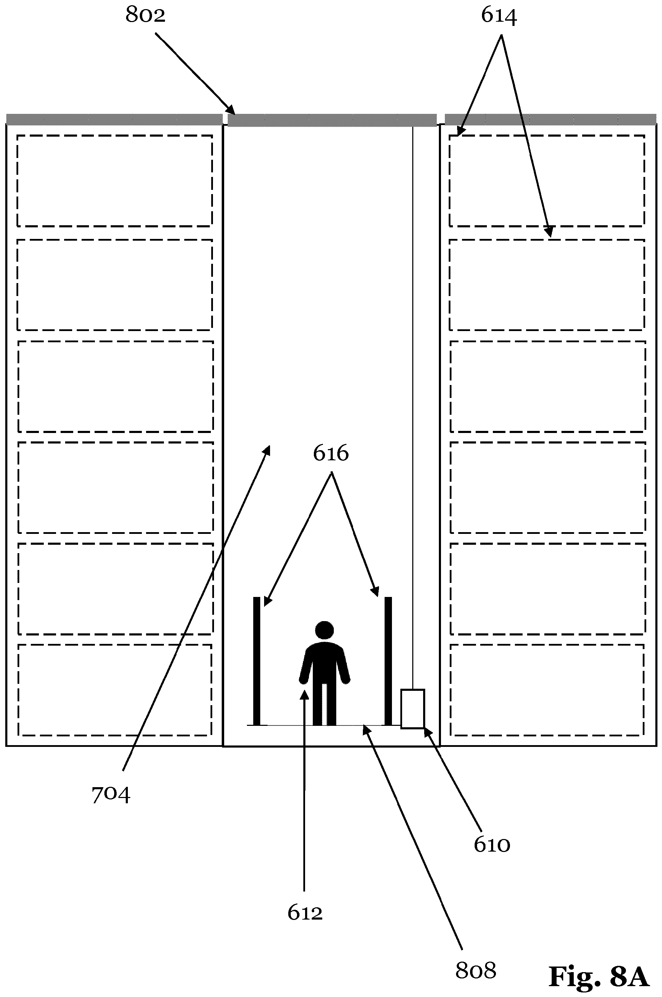

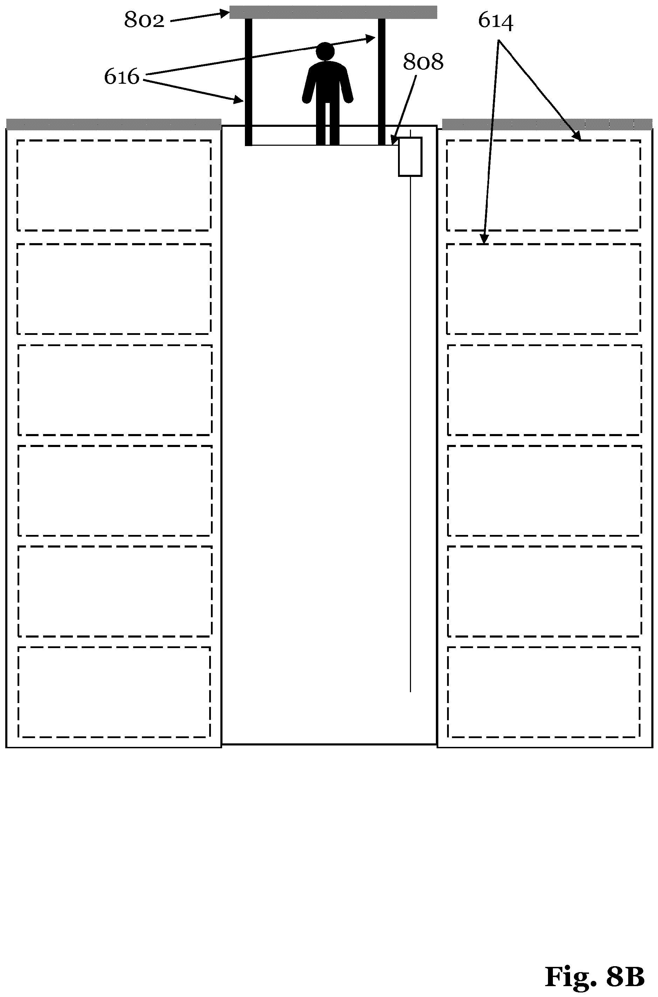

In another example depicted in Figs. 8A - 8B, the movement of one of the moveable sections 802 and the raisable support platform 808 may be driven by movement of the other. For example, as the support platform is raised by a respective drive mechanism, an engaging component such as one or more pillars 616 coupled to the support platform may, when the support platform reaches a certain height, engage the moveable section and cause the movement section to open. In other words, when the pillar engages the moveable section, both components may behave as described in relation to Figs. 6A and 6B (i.e., they move simultaneously). This embodiment may be preferred since it requires a single drive system for movement of both components whilst allowing the support platform to travel through a larger vertical distance without requiring the moveable section to be displaced by the same amount as the support platform. In other words, the moveable section 802 does not need to extend too high in the Z direction when in the deployed position, thus being more compact.

In some examples, the access space 604, 704 may be coupled to a second access space, or tunnel (not shown). The tunnel is configured to provide access between the access space 604, 704 and an area outside of the storage grid. This enables a service operator, robot, or other vehicle to access the access space 604, 704 from an area outside of the storage grid via the tunnel. By virtue of the features described throughout, this also enables an operator, robot, or vehicle to access the rail system from an area outside of the storage grid.

It will be appreciated that a storage system is not limited to a single moveable section, access space, support platform etc. according to the examples described in the present disclosure. That is, any number of moveable sections may be configured enable access to the rail system from any number of access spaces beneath the grid. For example, there may be two or more moveable sections corresponding to two or more access spaces. The access spaces associated with their respective moveable sections may all be coupled to the same tunnel which provides access between the rail system and an area outside of the storage system. Alternatively, the moveable sections may be coupled to different tunnels. Additionally or alternatively, two or more moveable sections may share a single access space. It will be appreciated that any combination of features here is plausible, and the examples given here are non-limiting.

The systems described in the present disclosure provide access to the rail system from an area outside of the storage grid. This access may be provided to the vicinity of the rail system in which the moveable section is installed. This increases the efficiency of the storage system, as any faults or issues associated with or located upon the rail system may be reached and dealt with more readily.

A possible safety requirement is to have emergency access points within a given distance of any operator. For an operator working on the rail system, the moveable section may act as an emergency access point thereby allowing an operator to enter or exit the grid more readily.

While providing the above desirable effects, the systems described herein may be implemented so as to not negatively affect the normal operation of the storage system. For example, robots are able to freely traverse the access points when they are not in use, thereby allowing for optimal routing of the robots. Incorporating examples of the present disclosure within a storage grid may decrease the total available storage space of the storage grid, which is a trade-off of implementing the access spaces within the grid. However, for sufficiently large storage grids, there may exist a breakpoint wherein it is more efficient from the perspective of servicing and maintenance to forgo some storage space in order to provide access to the rail system using the disclosed systems and techniques. For very large grids, it may also be more efficient to have multiple moveable sections corresponding to multiple respective access spaces in order to provide efficient means for accessing and servicing upon the grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage system for an automated storage and retrieval system, the storage system comprising:
a storage grid; and
a rail system arranged on top of the storage grid,
wherein the rail system comprises a first section configured to move between open and closed positions to enable access between an access space located beneath the rail system and at least a portion of the rail system.

2. The storage system of claim 1, wherein in an open position, access is provided between the access space and at least a portion of the rail system via an access opening in the rail system, and wherein in the closed position, the first section blocks the access opening so that access between the access space and the rail system is prevented.

3. The storage system of any preceding claim wherein the access space beneath the rail system comprises a ladder and/or stairs configured to provide access between a lower area of the space and an upper area of the space.

4. The storage system of any preceding claim, wherein the access space beneath the rail system comprises a support platform operably coupled to a lifting mechanism configured to raise and lower the support platform between a lower area of the space and an upper area of the space.

5. The storage system of claim 4, wherein the lifting mechanism is configured to move the support platform between a lowered position and a raised position, wherein when in the raised position, the support platform is substantially level with the rail system, and when in the lowered position, the support platform is lower than the rail system and situated within the space.

6. The storage system of claim 5 wherein the first section is configured to transition from a closed position to an open position prior to or concurrent with the support platform transitioning from the retracted position to the deployed position.

7. The storage system of claims 5 or 6, wherein the support platform is rigidly coupled to the first section such that movement of the support platform between the lowered and raised positions corresponds to substantially simultaneous movement of the first section between the closed and open positions.

8. The storage system of any of claims 5 to 7, wherein the support platform comprises a first rail element mounted thereon, the first rail element configured to be operably coupled to the rail system when the support platform is in the raised position.

9. The storage system of any of claims 4 to 8, wherein the support platform is configured to house a vehicle.

10. The storage system of any preceding claim, wherein the first section further comprises a second rail element configured to be operably coupled to the rail system when the first section is in the closed position, and wherein the second rail element is configured to be uncoupled from the rail system when the first section is in the open position.

11. The storage system of any preceding claim, wherein the first section is configured to pivot about one or more axes or translate in one or more directions to move between an open position and a closed position.

12. The storage system of any preceding claim, wherein the storage grid comprises a plurality of storage columns, and wherein the size and shape of the access space beneath the rail system is defined by surrounding storage columns.

13. The storage system of any preceding claim, wherein the access space is coupled to a tunnel configured to provide access between the space and an area outside of the storage grid.

14. The storage system of any preceding claim, comprising one or more second sections configured to move between respective open and closed positions to enable access between respective access spaces located beneath the rail system and at least a portion of the rail system.

15. The storage system of any of claims 1 to 13, comprising one or more second sections configured to move between respective open and closed positions to enable access between the access space located beneath the rail system and at least a portion of the rail system.
